# EUROPÄISCHE PATENTSCHRIFT

(11) **EP 0 691 919 B1**
(45) Veröffentlichungstag und Bekanntmachung des Hinweises auf die Patenterteilung: **15.04.1998**
(21) Anmeldenummer: 94911879.8
(22) Anmeldetag: 14.03.1994
(51) Int. Cl.: B65D 41/04, B65D 53/04

(54) **VERSCHLUSS FÜR EINE ÖFFNUNG EINES BEHÄLTERS**
SEALING COVER FOR AN OPENING OF A CONTAINER
BOUCHAGE POUR L'OUVERTURE D'UN RECIPIENT

(30) Priorität: 15.03.1993 DE 9303786 U
(43) Veröffentlichungstag der Anmeldung: 17.01.1996
(73) Patentinhaber: ALFELDER KUNSTSTOFFWERKE HERM. MEYER GMBH, D-31061 Alfeld/Leine (DE)
(72) Erfinder: WIENING, Heinz-Rudolf, D-31061 Alfred/Leine (DE); TROMBACH, Horst, D-28757 Bremen (DE)
(74) Vertreter: Einsel, Martin, Dipl.-Phys.
(86) Internationale Anmeldenummer: EP9400777
(87) Internationale Veröffentlichungsnummer: WO9421524

(56) Entgegenhaltungen:
- EP-A- 0 562 649
- FR-A- 2 693 986
- US-A- 4 917 949

## Beschreibung

Die Erfindung betrifft einen Verschluß mit einer die Öffnung des Behälters verschließenden ersten Folie, einer Metallfolie, insbesondere Aluminiumfolie zum Induktionsversiegeln der ersten Folie auf dem Rand der Öffnung, einem abnehmbaren und wiederaufsetz- oder aufschraubbaren Verschlußgehäuse, einer ersten Klebeschicht zwischen der ersten Folie und der Metallfolie, einer elastischen Schicht zwischen dem Verschlußgehäuse und der Metallfolie, und einer zweiten Klebeschicht zwischen der elastischen Schicht und der Metallfolie.

Die Erfindung betrifft außerdem eine Induktionssiegelscheibe für einen solchen Verschluß.

Seit mehreren Jahrzehnten werden Kunststoffbehälter, die mit Kunststoffschraubverschlüssen verschlossen sind, zusätzlich durch unterschiedliche Induktionssiegelscheiben zwischen Verschluß und Behälteröffnung verschlossen. Der ursprüngliche Sinn dieser zusätzlichen Versiegelung war, zu verhindern, daß die Flüssigkeiten beim Transport oder Lagern austreten können. Nach dem Abschrauben des Schraubverschlusses muß der Endverbraucher die Siegelschicht zusätzlich oder separat zerstören. In den letzten 10 Jahren hat sich diese Art der zusätzlichen Versiegelung als Originalitätsverschluß durchgesetzt, d.h. der Endverbraucher kann nach dem Öffnen des Drehverschlusses leicht feststellen, ob zwischen ihm und dem Abfüller jemand den Inhalt manipuliert hat, d.h. der Abfüller und Vermarkter hat einen zusätzlichen Schutz gegen Erpressungsversuche im Vertriebssystem. Im Laufe der Zeit haben sich hier die unterschiedlichsten Variationen von Induktionssiegelscheiben für die verschiedenen Verwendungszwecke entwickelt und sind in großen Stückzahlen im Einsatz. Die Induktionssiegelscheiben oder Bänder werden separat hergestellt. Der Verschlußhersteller (überwiegendes Herstellungsverfahren Spritzguß) legt die Scheiben in den Verschluß ein oder stanzt aus Bandware Scheiben, die unmittelbar in die Verschlüsse eingedrückt und verklebt werden. Das Verschlußgehäuse mit einliegender Induktionssiegelscheibe wird nach dem Abfüllen des Behälters beispielsweise verschraubt. Anschließend durchläuft der verschlossene Behälter eine Induktionssiegelzone. Hierbei wird das Versiegeln bewirkt. Einheitlich ist bei allen unterschiedlichen Verbunden, daß ein Teil des Verbundes eine Metallfolie - überwiegend eine Aluminiumfolie - ist. Die Metallfolie fungiert beim Induktionsvorgang als Antenne für den Induktionsstrom. Die Energie wird in der Metallfolie in Wärme umgewandelt, die sich auf eine Siegelschicht überträgt und so die Versiegelung bewirkt.

Unterhalb der Metallfolie befindet sich die mit dem jeweiligen Material (Kunststoff) der Behälter abgestimmte Siegelschicht. Oberhalb der Metallfolie befindet sich eine elastische Schicht, die durch den Klemmdruck des Verschlußgehäuses ein einwandfreies Andrücken der Siegelschicht an den Behälter gewährleistet. Sehr häufig ist diese elastische Schicht mit der Metallfolie durch Wachs oder andere Kleber verbunden. Beim Induktionssiegelvorgang wird das Wachs flüssig und diffundiert entweder in die speziell gestaltete elastische Schicht oder es werden zusätzliche Papierschichten verwendet. Kennzeichnend für alle bisher im Einsatz befindlichen Induktionssiegelscheiben ist, daß die Metallfolie nach der Versiegelung fest verbunden mit der Siegelschicht auf dem Behälter verbleibt.

Ein solcher Behälterverschluß ist beispielsweise aus der US-PS 4,917,949 bekannt. Die elastische Schicht besteht dort aus Pappe oder Zellstoffpappe. Da diese elastische Schicht nach dem Öffnen des Verschlusses und während der Benutzungszeit des Behälters mit dem Behälterinneren in Kontakt kommt, nämlich im Grunde die Abdichtung des Behälterverschlusses nach der Erstöffnung sicherstellt, wird in der US-PS 4,917,949 ein spezieller Klebstoff vorgeschlagen, der zunächst die metallische Folie mit dieser Pappschicht verbindet und nach der Induktionsversiegelung sich chemisch umwandelt und anschließend einen Schutz für die Pappschicht bildet.

Beim erstmaligen Öffnen des Behälters trennt sich die Verschlußkappe mit der darin befindlichen Pappe bzw. Zellstoffpappe samt der umgewandelten chemischen Schutzschicht von dem Behälter, dessen Mündung zu diesem Zeitpunkt von der Versiegelungsschicht und der mit dieser fest verklebten Metallfolie verschlossen ist.

Problematisch ist, daß das Aluminium, das bei der Induktionsversiegelung benutzt wird, nach dem Öffnen des Behälters mit Zerstörung der Aluminiumschicht am Rande der Behälteröffnung verbleibt, und so ein Recycling des Behälters verhindert.

Als Abhilfe zu diesem Problem ist in der US-PS 4,596,338 und in der EP 0 488 985 A1 ein Weg angegeben worden, wonach stattdessen eine ablösbare Zwischenschicht dafür sorgt, daß die Metallfolie nach dem Abschrauben oder Abnehmen der Verschlußkappe in dieser verbleibt und nur noch die Kunststoff-Hitzeversiegelungsschicht die Behältermündung verschließt.

Nunmehr kann zwar der Behälter entsorgt und recycled werden, dafür stellt aber die Verschlußkappe nach wie vor ein Problem für die Entsorgung dar, da Mischungen aus Metallfolien mit Kunststoff (die Kappen bestehen üblicherweise aus Kunststoff) eine Wiederaufbereitung oder Wiederverwendbarkeit ausschließt.

Eine Nutzung der Vorteile aus der US-PS 4,917,949 ist bei einer solchen Konzeption ebenfalls nicht möglich, da nun die Metallfolie im Behälterdeckel diejenige Schicht ist, die beim Wiederverschließen des Behälters in Kontakt mit dem Behälterinneren käme.

Aufgabe der Erfindung gegenüber dem Stand der Technik ist es, einen Verschluß vorzuschlagen, der eine getrennte Entsorgung auch der Behälterbestandteile noch ermöglicht.

Diese Aufgabe wird bei einem gattungsgemäßen Verschluß dadurch gelöst, daß die zweite Klebeschicht zwischen der Metallfolie und der elastischen Schicht ein bei Induktionstemperaturen flüssig werdendes Material aufweist, und eine Saugschicht vorgesehen ist, wobei letztere beim Induktionsvorgang die verflüssigte Substanz der Klebeschicht aufnimmt und daß die erste Klebeschicht ein Material aufweist, das nach der Induktionsversiegelung eine bleibende, jedoch manuell lösbare Verbindung bildet und keine benachbarte Saugschicht aufweist.

Bei einer Induktionssiegelscheibe wird diese Aufgabe dadurch gelöst, daß sie aus einem Verbundmaterial besteht, das eine Polymerscheibe, eine zweite Klebeschicht, eine Saugschicht, eine Metallfolie, eine erste Klebeschicht und eine Folie zum Siegeln in dieser Reihenfolge aufweist, wobei die erste Klebeschicht nach einem Induktionsversiegelungsvorgang eine bleibende, jedoch manuell lösbare Verbindung und die zweite Klebeschicht nach dem Induktionsversiegelungsvorgang eine aufgehobene Verbindung bilden.

Im folgenden Text wird aufgrund dieser Eigenschaften der ersten und zweiten Klebeschicht die erste Klebeschicht als "kontrollierte Haftschicht" und die zweite Klebeschicht als "Trennschicht" bezeichnet.

Mit der erfindungsgemäßen Lösung wird dafür gesorgt, daß beim erstmaligen Aufschrauben bzw. Abnehmen der Kappe (also lange nach dem Induktionsversiegelungsvorgang) zunächst die Metallfolie noch an der Versiegelungsfolie auf der Behälteröffnung anhaften oder -kleben bleibt, während die Verschlußkappe sich ohne Metallfolienteile nach oben abnehmen läßt. Ist die Verschlußkappe entfernt, so kann die Metallfolie aufgrund der kontrollierten Haftschicht zum Ablösen problemlos von der Kunststoffolie abgezogen und sogleich in die Aluminiumentsorgung bzw. -wiederaufbereitung gegeben werden. Es befinden sich dann keine Metall- (Aluminium-)teile mehr an der Behälteröffnung oder in der Verschlußkappe.

Anschließend kann die Versiegelungsfolie zerstört und der Inhalt des Behälters entnommen werden, mit der Verschlußkappe kann gleichwohl die Öffnung nach Entnahme wieder verschlossen (zugeschraubt) werden. Die elastische Schicht sorgt in diesem Fall für eine gute Abschichtung des wieder verschlossenen Behälters.

Die bisher maximal zweiteilige Induktionssiegel-Dichtscheibe wird in eine dreiteilige umgewandelt.

Der elastische Teil, der zum Ausgleichen der Toleranzen und zum sicheren Anpressen der Siegelscheibe wünschenswert ist, wird insbesondere eine Polymerscheibe, bei der bevorzugt die Auswahl des Polymers auf die Recyclingfähigkeit gemeinsam mit der Verschlußkappe ausgerichtet wird. Darüber hinaus sollte darauf geachtet werden, daß die Temperaturbeständigkeit entsprechend hoch ist, um ein "Ankleben" durch die Erwärmung zu verhindern.

Die Verbindung zum Metallteil geschieht durch Wachs oder andere adhesive Stoffe, die vollflächig oder gemustert aufgetragen werden. Kennzeichnend für diese Produkte ist, daß sie bei hohen Temperaturen flüssig werden, um damit in die auf die Metallfolie aufkaschierte Papierschicht diffundieren zu können. Die Metallfolie fungiert beim Induktionsvorgang als Antenne für den Induktionsstrom. Die Energie wird in der Metallfolie in Wärme umgewandelt. Durch die Wärme in Verbindung mit den ausgewählten Wachsen, Klebern und dgl. und der gewählten Papierkaschierung tritt beim Induktionsvorgang eine vollkommene Trennung zum elastischen Oberteil ein.

Die Verbindung der Metallfolie zum eigentlichen Siegelteil erfolgt ebenfalls mit Wachsen oder dgl. Dieses Wachs wird beim Induktionsvorgang nicht in anliegende Schichten diffundieren, da sowohl die Metallfolie als auch die Siegelschicht kein Wachs aufnehmen können. Das Wachs wird hingegen entsprechend der Temperaturzeitkurve zum Zentrum der Scheibe konzentriert, so daß eine bleibende Verbindung der Metallfolie zum Siegelteil bestehen bleibt, die jedoch beim Abnehmen von Hand leicht gelöst unterbrochen werden kann.

Nach dem Entfernen der Metall- (Alu-) Folie wird die Kunststoffschicht, die den Behälter absolut dicht verschlossen hat, nach dem gleichen Verfahren geöffnet wie die bisherigen Metallkunststoffsiegelscheiben seit Jahrzehnten geöffnet werden. Zu diesem Zweck kann auf der oberen Fläche der Schraubkappe ein Schneiddorn angebracht sein.

Die elastische Polymerscheibe verbleibt in der Verschlußkappe und dient beim mehrmaligen Gebrauch des Behälters zur einwandfreien Abdichtung.

Im folgenden wird anhand der Zeichnung ein Ausführungsbeispiel der Erfindung im einzelnen beschrieben.

Es zeigen:
- Fig. 1: einen schematischen Schnitt durch einen Behälterverschluß in zwei Zuständen;
- Fig. 2: einen schematischen Schnitt durch eine Induktionssiegelscheibe.

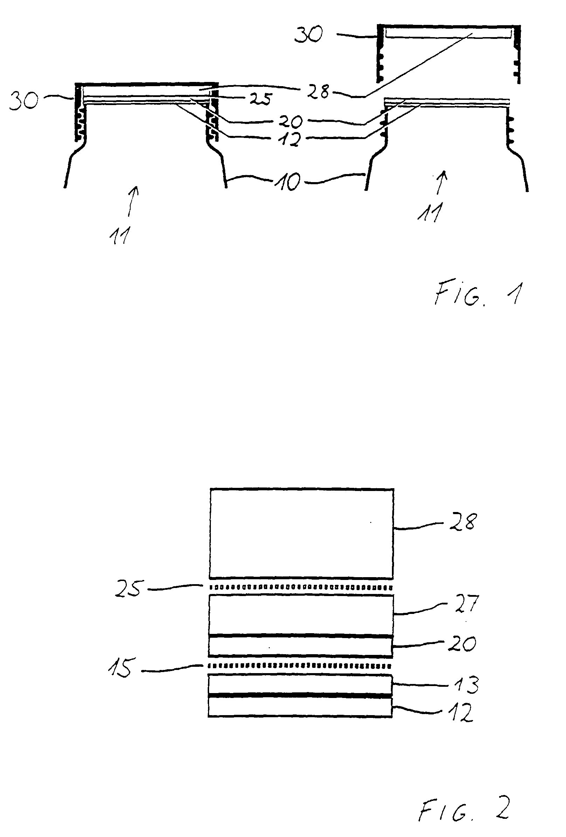

Die Figuren zeigen Schnitte durch einen Verschluß. In Fig. 1 zu erkennen ist ein Behälter 10, der am oberen Ende eine Öffnung 11 aufweist. Der Behälter kann flaschenförmig sein, aber auch andere Formen, beispielsweise Kanister, sind denkbar. Die linke Seite der Fig. 1 zeigt den Verschluß vor, die rechte Seite nach dem Abdrehen eines Verschlußgehäuses 30.

Die Öffnung 11 ist mit einer ersten Folie 12 nach oben verschlossen. Diese Folie besteht aus einem Kunststoff als Siegelschicht, beispielsweise einem durchsichtigen Material, etwa aus Polyäthylen, der auf den jeweiligen Behälterwerkstoff abgestimmt ist. Sie kann mit einer Verstärkungsschicht 13 nach oben versehen sein, die in der vergrößerten Darstellung in Fig. 2 deutlich zu erkennen ist.

Die Folie 12 ist nach oben mit einer kontrollierten Haftschicht 15 zum Ablösen bedeckt. Diese kontrollierte Haftschicht zum Ablösen ist ein adhäsives Material nach Art eines Klebstoffes mit einer vorbestimmten Klebkraft und Ablösefähigkeit.

Oberhalb der kontrollierten Haftschicht 15 zum Ablösen ist eine Metallfolie 20, etwa aus Aluminium, vorgesehen. Die Abmessung der Metallfolie 20 entspricht unter Berücksichtigung der üblichen Toleranzen wie die der übrigen Schichten der Dichtscheibe der Größe der Öffnung 11 des Behälters 10 bzw. dem Innendurchmesser des Verschlußgehäuses 30. Diese Metallfolie 20 führt bei Anwendung der Induktionsversiegelung dazu, daß sich die Folie 12 fest mit dem Rand der Öffnung 11 des Behälters 10 verschweißt und diesen dicht verschließt.

Die Metallfolie 20 wird nach unten durch die kontrollierte Haftschicht 15 zum Ablösen an der Folie 12 bzw. der Verstärkungsschicht 13 gehalten.

Sie weist ihrerseits nach oben eine Saugschicht 27 und eine Trennschicht 25 auf.

Die beiden Schichten 25 und 27 verbinden die Metallfolie 20 mit der Unterseite des Verschlußgehäuses 30. Im Verschlußgehäuse 30 ist noch eine elastische Schicht 28 vorgesehen, die Toleranzen ausgleicht sowie für eine einwandfreie Abdichtung der Öffnung des Behälters bei späteren Öffnungs- und Schließvorgängen sorgt. Das Verschlußgehäuse 30 besteht aus Kunststoff, etwa HDPE- oder LDPE-Schaum, die elastische Schicht 28 aus gleichen oder ähnlich gemeinsam recycelfähigen Material.

Beim Induktionsversiegelungsvorgang schmelzen die kontrollierte Haftschicht 15 zum Ablösen und die Trennschicht 25, die vorzugsweise aus dem gleichen Material bestehen. Die Substanz der Trennschicht 25 diffundiert vollständig in die Saugschicht 27, die der kontrollierten Haftschicht 15 zum Ablösen dagegen konzentriert sich in der Mitte der Scheibe, da die benachbarten Schichten sie nicht aufnehmen können. Sie bleibt mit der Folie 12 oder der Verstärkungsschicht 13 verbunden.

Wird nun beim Verbraucher beim erstmaligen Öffnungsvorgang des Verschlußgehäuses 30 nach oben abgenommen, so wird die eingeklebte elastische Schicht 28 mit abgehoben, da sie nicht mehr mit der Metallfolie 20 verbunden ist. Alle übrigen Bestandteile verbleiben auf der Öffnung 11 des Behälters 10. Das Verschlußgehäuse 30 läßt sich somit nach oben abnehmen, ohne daß nichtrecycelfähige Teile des Verbundes in ihm haften oder kleben bleiben.

Jetzt kann jedoch durch Ausüben einer geringen Kraft der Verbund zur Trennung gebracht werden, indem von Hand die Metallfolie 20 von der Siegelschicht abgehoben wird, da die kontrollierte Haftschicht 15 zum Ablösen entsprechend der Temperaturzeitkurve eine Konzentration im Zentrum der Scheibe erfahren hat.

Der Verbraucher hat dann sauber die erste Folie 12 ( ggf. mit Verstärkungsschicht 13) vor sich und muß nur noch diese zerstören, um an den Behälterinhalt zu gelangen.

## Patentansprüche

1. Verschluß für eine Öffnung eines Behälters mit
- einer die Öffnung (11) des Behälters (10) verschließenden ersten Folie (12),
- einer Metallfolie (20), insbesondere Aluminiumfolie zum Induktionsversiegeln der ersten Folie (12) auf dem Rand der Öffnung (11),
- einem abnehmbaren und wiederaufsetz- oder aufschraubbaren Verschlußgehäuse (30),
- einer ersten Klebeschicht (15) zwischen der ersten Folie (12) und der Metallfolie (20),
- einer elastischen Schicht (28) zwischen dem Verschlußgehäuse (30) und der Metallfolie (20), und
- einer zweiten Klebeschicht (25) zwischen der elastischen Schicht (28) und der Metallfolie (20),
**dadurch gekennzeichnet,**
**daß** die zweite Klebeschicht (25) zwischen der Metallfolie (20) und der elastischen Schicht (28) ein bei Induktionstemperaturen flüssig werdendes Material aufweist, und eine Saugschicht (27) vorgesehen ist, wobei letztere beim Induktionsvorgang die verflüssigte Substanz der Klebeschicht (25) aufnimmt, und **daß** die erste Klebeschicht (15) ein Material aufweist, das nach der Induktionsversiegelung eine bleibende, jedoch manuell lösbare Verbindung bildet und keine benachbarte Saugschicht aufweist.

2. Verschluß nach Anspruch 1,
**dadurch gekennzeichnet,**
**daß** die elastische Schicht (28) zwischen dem Verschlußgehäuse (30) und der zweiten Klebeschicht (25) bzw. der Saugschicht (27) eine elastische Polymerschicht ist.

3. Verschluß nach Anspruch 2,
**dadurch gekennzeichnet,**
**daß** die elastische Schicht (28) aus einem mit dem Verschlußgehäusematerial gemeinsam recyclefähigen Material besteht.

4. Verschluß nach einem der vorhergehenden Ansprüche,
**dadurch gekennzeichnet,**
**daß** zur Herstellung des Verschlusses eine Induktionssiegelscheibe aus einem Verbundmaterial eingesetzt wird, das eine Polymerscheibe (28), eine Trennschicht (25), eine Saugschicht (27), eine Metallfolie (20), eine kontrollierte Haftschicht (15) zum Ablösen und eine Folie (12) zum Siegeln in dieser Reihenfolge aufweist.

5. Verschluß nach einem der vorhergehenden Ansprüche,
**dadurch gekennzeichnet,**
**daß** die kontrollierte Haftschicht (15) zum Ablösen und die Trennschicht (25) aus dem gleichen Material, insbesondere einem Wachs, bestehen.

6. Induktionssiegelscheibe für einen Verschluß nach einem der vorhergehenden Ansprüche,
**dadurch gekennzeichnet,**
**daß** sie aus einem Verbundmaterial besteht, das eine Polymerscheibe (28), eine zweite Klebeschicht (25), eine Saugschicht (27), eine Metallfolie (20), eine erste Klebeschicht (15) und eine Folie (12) zum Siegeln in dieser Reihenfolge aufweist,
wobei die erste Klebeschicht (15) nach einem Induktionsversiegelungsvorgang eine bleibende, jedoch manuell lösbare Verbindung und die zweite Klebeschicht (25) nach dem Induktionsversiegelungsvorgang eine aufgehobene Verbindung bilden.

7. Induktionssiegelscheibe nach Anspruch 6,
**dadurch gekennzeichnet,**
**daß** die erste und die zweite Klebeschicht (15, 25) aus dem gleichen Material, insbesondere einem Wachs, bestehen.

## Claims

1. Closure for an opening of a container with
- a first foil (12) sealing the opening (11) of the container (10),
- a metal foil (20), in particular aluminium foil, for the inductive sealing of the first foil (12) on the edge of the opening (11),
- a removable sealing lid (30) that can be placed or screwed back on again,
- a first adhesive layer (15) between the first foil (12) and the metal foil (20),
- an elastic layer (28) between the sealing lid (30) and the metal foil (20), and
- a second adhesive layer (25) between the elastic layer (28) and the metal foil (20),
**characterised in that**
the second adhesive layer (25) between the metal foil (20) and the elastic layer (28) comprises a material which becomes liquid at induction temperatures, and a suction layer (27) is provided, wherein the latter absorbs during the induction process the liquefied substance of the adhesive layer (25), and that the first adhesive layer (15) comprises a material which after the inductive sealing forms a permanent but manually loosenable connection and does not have an adjoining suction layer.

2. Closure according to claim 1,
**characterised in that**
the elastic layer (28) between the sealing lid (30) and the second adhesive layer (25) or the suction layer (27) is an elastic polymer layer.

3. Closure according to claim 2,
**characterised in that**
the elastic layer (28) consists of a material that can be recycled jointly with the sealing lid material.

4. Closure according to any one of the preceding claims,
**characterised in that**
there is used for manufacturing the closure an inductive sealing disc consisting of a composite material comprising a polymer disc (28), a separation layer (25), a suction layer (27), a metal foil (20), a controlled adhesion layer (15) for the releasing and a foil (12) for the sealing in this order.

5. Closure according to any one of the preceding claims,
**characterised in that**
the controlled adhesion layer (15) for the releasing and the separation layer (25) consist of the same material, in particular a wax.

6. Inductive sealing disc for a closure according to any one of the preceding claims,
**characterised in that**
it consists of a composite material comprising a polymer disc (28), a second adhesive layer (25), a suction layer (27), a metal foil (20), a first adhesive layer (15) and a foil (12) for the sealing in this order, wherein the first adhesive layer (15) forms after an induction sealing process a permanent but manually loosenable connection and the second adhesive layer (25) forms after the induction sealing process a lifted off connection.

7. Induction sealing disc according to claim 6,
**characterised in that**
the first and the second adhesive layers (15, 25) consist of the same material, in particular a wax.

## Revendications

1. Système de bouchage pour un orifice d'un récipient, comprenant
- une première feuille (12) qui obture l'orifice (11) du récipient (10),
- une feuille métallique (20), en particulier une feuille d'aluminium, pour le scellage par induction de la première feuille (12) sur le bord de l'orifice (11),
- une capsule de fermeture (30) amovible et susceptible d'être à nouveau posée ou vissée,
- une première couche de collage (15) entre la première feuille (12) et la feuille métallique (20),
- une couche élastique (28) entre la capsule de fermeture (30) et la feuille métallique (20), et
- une deuxième couche de collage (25) entre la couche élastique (28) et la feuille métallique (20),
caractérisé en ce que la deuxième couche de collage (25) entre la feuille métallique (20) et la couche élastique (28) contient un matériau qui devient fluide aux températures de l'induction et il est prévu de déposer une couche d'absorption (27), cette dernière absorbant pendant le processus d'induction la substance liquéfiée de la couche de collage (25), et en ce que la première couche de collage (15) contient un matériau qui forme après le scellage par induction une liaison stable, mais détachable à la main et ne comporte aucune couche d'absorption voisine.

2. Système de bouchage selon la revendication 1, caractérisé en ce que la couche élastique (28) entre la capsule de fermeture (30) et la deuxième couche de collage (25) ou la couche d'absorption (27) est une couche élastique en polymère.

3. Système de bouchage selon la revendication 2, caractérisé en ce que la couche élastique (28) est réalisée dans un matériau qui peut être recyclé conjointement avec le matériau de la capsule de fermeture.

4. Système de bouchage selon l'une quelconque des revendications précédentes, caractérisé en ce que la réalisation du système de bouchage nécessite l'utilisation d'un disque à sceller par induction, réalisé dans un matériau composite, qui est formé dans l'ordre suivant par une couche polymère (28), une couche de séparation (25), une couche d'absorption (27), une feuille métallique (20), une couche adhésive contrôlée (15) à détacher et une feuille (12) pour le scellage.

5. Système de bouchage selon l'une quelconque des revendications précédentes, caractérisé en ce que la couche adhésive contrôlée (15) à détacher et la couche de séparation (25) sont réalisées dans le même matériau, en particulier la cire.

6. Disque à sceller par induction pour un système de bouchage selon l'une quelconque des revendications précédentes, caractérisé en ce qu'il est réalisé dans un matériau composite, qui est formé dans l'ordre suivant par une couche polymère (28), une deuxième couche de collage (25), une couche d'absorption (27), une feuille métallique (20), une première couche de collage (15) et une feuille (12) pour le scellage, la première couche de collage (15) constituant après le processus de scellage par induction une liaison stable, mais détachable à la main, et la deuxième couche de collage (25) formant une liaison neutralisée.

7. Disque à sceller par induction selon la revendication 6, caractérisé en ce que la première et la deuxième couche de collage (15, 25) sont réalisées dans le même matériau, en particulier la cire.
